Europäisches Patentamt

European Patent Office

Office européen des brevets

(11) Publication number: **0 462 352 A1**

# EUROPEAN PATENT APPLICATION

(21) Application number: 90830279.7

(22) Date of filing: 18.06.90

(51) Int. Cl.5: **B65G 21/12**, B65G 57/112, B65B 27/10, B21B 39/00

(43) Date of publication of application:
27.12.91 Bulletin 91/52

(84) Designated Contracting States:
AT BE CH DE DK ES FR GB GR IT LI LU NL SE

(71) Applicant: Moscattini, Federico
Viale dei Patriarchi 66
I-33030 Basaldella Di Campoformido (UD)(IT)

Applicant: Roseano, Mario
Via della Libertà 18/2
I-33100 Udine(IT)

(72) Inventor: Moscattini, Federico
Viale dei Patriarchi 66
I-33030 Basaldella Di Campoformido (UD)(IT)
Inventor: Roseano, Mario
Via della Libertà 18/2
I-33100 Udine(IT)

(74) Representative: D'Agostini, Giovanni, Dr.
D'AGOSTINI ORGANIZZAZIONE n. 17 via
G.Giusti
I-33100 Udine(IT)

(54) Method and device or plant for transverse uniform discharging bars in a holdall to form a bundle or a pack.

(57) A method and device or plant for transverse uniform discharging bars (b') in a holdall to form a pack (3) by means of relative oscillation of the discharging means (2) if compared to the receiving holdall bars (3), characterized in that said discharging means (2) are belt or chain endless discharging means (21) with an end jutting discharging protrusion extending above said holdall (21') for discharging in continuous and in rolling way the bars (b') in said holdall packing means (3) during said oscillation.

This invention concerns a method and device or plant for transverse uniform discharging bars in a holdall to form a bundle or a pack.

The invention is particularly useful in the rolling plants for the iron rods production.

It is known that the discharging of iron rods to a holdall for the successive binding involves the necessity of their uniform distribution to avoid accumulations and tangling that obstacles the following bars extraction.

For obtaining a uniformity of discharge of the iron rods in the holdall, oscillating discharging means are well known. This discharging means utilize an oscillating tilted plane for facilitating the bars rolling down (like a reciprocable tongue).

This solution involves however misalignment problems because the iron rods are not straight and because their great length if compared to the respective diameter. Consequently it is difficult to oblige the falling bars in rolling way but preferably they will slide or the bars will slide and roll. In this condition in falling down firstly fall one bar end and then the other. The consequence is that the iron rods depose not aligned or not parallel creating the mentioned tangling problems.

Purpose of the invention is to obviate these drawbacks.

The invention as claimed, solves the exposed problems by means of a method and device or plant for transverse uniform discharging bars in a holdall to form a pack by means of relative oscillation of the discharging means if compared to the receiving holdall bars, characterized in that said discharging means are belt or chain endless discharging means with an end jutting discharging protrusion extending above said holdall for discharging in continuous and in rolling way the bars in said holdall packing means during said oscillation.

With this solution we obtain a uniform bar deposition in the holdall with no heaping and entangling.

The invention is better understood with the accompanying drawings:

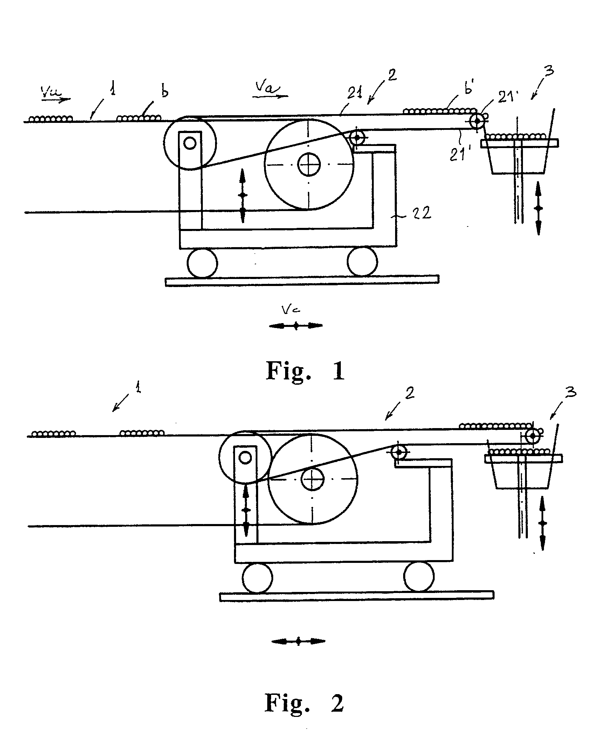

Figs.1 and 2 show respectively in schematic side view a discharging device in two positions of the discharging device.

The reference 2 represent the discharging device including a belt or chain endless rolling conveyor 21, mounted on a trolley 22 that reciprocally oscillates on the receiving holdall 3.

The belt or chain endless rolling conveyor 21 extends with his downwards end in jutting way 21' above the receiving holdall 3 in order to distribute uniformly the bars in reciprocal movement on the holdall.

The belt or chain endless rolling conveyor 21 is movable even vertically for varying its height and interfere under the upwards belt or chain endless rolling conveyor transfer bar supplier (1) in order that:

- In the backwards oscillation the belt or chain endless rolling conveyor discharger (21) lowers under the plane of upwards supplier (1) while the bars are discharged on the holdall uniformly;
- In the upwards position the belt or chain endless rolling conveyor discharger (21) rises to bring on it the bars (b) and advance toward the holdall (3) and there discharge the bars (b') uniformly being the reciprocation realized by the trolley (22),
- Terminate the forward stroke ,
- The trolley (22) reverses the sense recalling back the discharger (21) while endless rolling conveyor discharger continues the discharging.

Two are the fundamental conditions :

- First in advancement wherein the absolute advancing speed of the discharging device (21) is (Va + Vc) their value being equal or more than the advancement speed of the upwards bars supply means Vu. Considering that the relative speed of the discharging device advances at a speed Va lower than the advancement speed of the trolley Vc for a value to consent the falling of the bars one close to the other in the holdall (3) without interference;
- Second in return wherein the back speed of the trolley Vc if compared to the relative speed of the discharging device must realize the same condition. For obtaining said condition, in both strokes the speed Vc of the trolley (22) is different on go and back, alternatively should vary the advancement speed of the discharging device (21).

This second solution is easily obtained by means of speed variator.

## Claims

1. A method and device or plant for transverse uniform discharging bars in a holdall to form a bundle or a pack (3) by means of relative oscillation of the discharging means (2) if compared to the receiving holdall bars (3), characterized in that said discharging means (2) are belt or chain endless discharging means (21) with an end jutting discharging protrusion extending above said holdall (21') for discharging in continuous and in rolling way the bars in said holdall packing means (3) during said oscillation.

2. A method and device or plant for discharging bars in holdall to form a bundle or a pack (3) according to claim 1, characterized in that said relative oscillation between said discharging means (2) and said holdall (3) is obtained by means of reciprocal displacement of said discharging means (2).

3. A method and device or plant for discharging in bars in holdall to form a bundle or a pack (3) according to claim 1, characterized in that said relative oscillation between said discharging means (2) and said holdall (3) is obtained by means of reciprocal displacement of said holdall (3).

4. A method and device or plant for discharging bars in a holdall (3) according to claim 1, characterized in that said discharging means (21) is mounted on a reciprocable trolley (22).

5. A method and device or plant for discharging bars in a holdall (3) according to claim 1, characterized in that the sum of the advancing of relative speed of said discharging device (21) and the advancement speed (Vc) of the oscillating device (22) is equal or more then the speed (Vu) of the respective bars supply (1).

6. A method and device or plant for discharging bars in a holdall (3) according to claim 1, characterized in that the speed (Vc) of the of the oscillating means (22) if compared with the relative forward speed of the discharging device with his discharging end (21') is at less equal to the thick section of the discharged bar.

7. A method and device or plant for discharging bars to a holdall (3) according to claim 1, characterized in that the the advancing stroke speed (Vc) of the oscillating means (22) is different from the backwards stroke.

8. A method and device or plant for discharging bars in a holdall (3) according to claim 1, characterized in that the advancing speed of said endless discharging means (21) is variable.

Fig. 1

Fig. 2

4

European
Patent Office

EUROPEAN SEARCH
REPORT

Application Number

EP 90 83 0279

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 264 430   (SCHOCK)<br>* Pages 5,7,8; figures 1,7 * | 1-3,5 | B 65 G 21/12<br>B 65 G 57/112 |
| A | | 6-8 | B 65 B 27/10<br>B 21 B 39/00 |
| | — — — | | |
| X | FR-A-2 477 116   (CORALI)<br>* Pages 5-13; figures 1-7 * | 1,2,4-8 | |
| | — — — | | |
| X,A | DE-A-2 320 730   (SCHULTE)<br>* Pages 6-8; figures * | 1,2,4-6 | |
| | — — — | | |
| X | FR-A-2 383 102   (RAMIERE)<br>* Pages 3-7; figures * | 1,2,4,6-8 | |
| | — — — | | |
| X | US-A-3 548 895   (GENTRY)<br>* Columns 5,6; figures 1,3,5,7,8 * | 1,2,4 | |
| A | | 5-8 | |
| | — — — | | |
| A | US-A-2 413 979   (LAMB) | | |
| | — — — | | |
| A | JP-A-5 601 223   (TOYAMA KEIKINZOKU KOGYO)(06-02-1981)<br>& PATENT ABSTRACTS OF JAPAN, vol. 5, no. 57 (M-64)[729], 18th April 1981 | | TECHNICAL FIELDS SEARCHED (Int. Cl.5)<br><br>B 21 B<br>B 65 B<br>B 65 G |
| | — — — — — | | |

The present search report has been drawn up for all claims

| Place of search | Date of completion of search | Examiner |
|---|---|---|
| The Hague | 31 January 91 | ROSENBAUM H.F.J. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

                                   

& : member of the same patent family, corresponding
    document